# EUROPEAN PATENT APPLICATION

(11) **EP 1 524 581 A1**
(43) Date of publication of application: **20.04.2005**
(21) Application number: 04024197.8
(22) Date of filing: 11.10.2004
(51) Int. Cl.: G06F 1/00

(54) **IC card system**

(30) Priority: 15.10.2003 JP 2003355527
(71) Applicant: Systemneeds Inc., Tokyo 105-0014 (JP)
(72) Inventor: Nakayama, Keisuke, Minato-ku Tokyo 105-0014 (JP)
(74) Representative: Liesegang, Roland, Dr.-Ing.

(57) **Abstract**

An IC card system capable of increasing a storage capacity virtually and flexibly while making the best use of characteristics of the IC card, facilitating file layout, and ensuring security among applications.

With personal common information (data A) and virtual area management information (access keys, encryption/decryption keys, and information indicating encrypted data file location) stored in the IC card (1), an application executed by a control unit (30) of a processor (3) loads the data A in a memory (32), acquires the encryption/decryption key corresponding to the retained access key and the information indicating the encrypted data file location from the IC card (1), reads encrypted data B' from the acquired data file location, decrypts the acquired encryption/decryption key, and loads the data B in the memory (32) for using the data.

## Description

### BACKGROUND OF THE INVENTION

### 1. Field of the Invention

The present invention relates to an IC card system, and more particularly to an IC card system capable of ensuring a virtual storage area and ensuring a security of the virtual storage area by efficiently using particularly a physical storage area of an IC card.

### 2. Related Background Art

In general, an IC card (referred to as a smart card in the United States and Europe) is a plastic card in which an IC chip is embedded. It is attracting widespread attention as a next-generation card since it can treat a large amount of data in comparison with a magnetic card widely used at present and is superior in security (safety).
Particularly, in an electronic purse (electronic money) or an electronic commerce, security is extremely important and therefore use of the IC card is indispensable. The field of IC card application is not limited thereto. For example, in the field of medical treatment, use of the IC card is under consideration for improving services and for rationalizing business matters by recording a medical history, medical records, health care information or the like on a consultation ticket or a resident card. Moreover, a considerable number of companies are considering an introduction of multifunctional employee ID cards having an intra-company private security system (a door security system, access management on a network, or the like), focusing on the IC card security. Furthermore, an IC card application to residents' basic register information is also under consideration for the system architecture of the Basic Resident Register.
As stated above, the range of IC card applications is very wide and it is not too much to say that an IC card can be used in every application or system requiring a card.

In this situation, information in the IC card is recorded in a nonvolatile memory such as an electrically erasable programmable read-only memory (EEPROM) embedded in the IC chip: its memory capacity is in the order of 200 bytes at the minimum and several tens of kilobytes at the maximum.

Under the circumstances of the spreading application field of the IC card and the increasing amount of information to be stored caused by its superiority in portability, the IC card is required to have a large memory capacity.
On the other hand, in a card having a microprocessor incorporated therein (CPU card), it is very hard to read or alter information fraudulently since the microprocessor manages all accesses to the card memory. In view of the fact that a single card is capable of coping with a plurality of applications (application fields) by using a CPU card, a further increase in the memory capacity is desired.

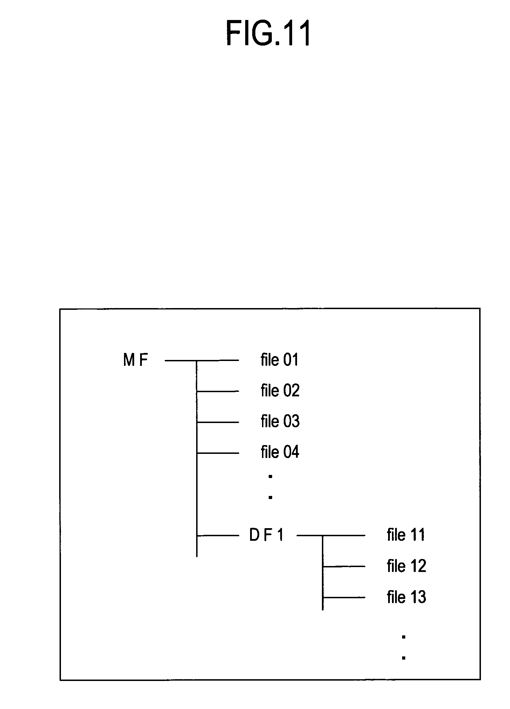

Hereinafter, an illustration of a data organization in a memory area of the IC card will be described with reference to Fig. 11. Referring to Fig. 11, there is shown an explanatory diagram illustrating an example of a data organization in the memory area of the IC card.
The IC card can contain various settings about a file organization and access controls to the file. For example, it is basically composed of an IC card CPU, a master file (MF), and a set (DF: dedicated file) of a plurality of data files (EF: elementary files).
The IC card CPU is provided with a CPU and performs processing controls within the IC card.

As a conventional technology related to the memory access control of the IC card, Japanese Laid-Open Patent Publication (Kokai) No. 2003-16403 published on January 17, 2003 discloses "Information Storage Medium, IC Chip with Memory Area, Information Processor Having IC Chip with Memory Area, and Memory Management Method of Information Storage Medium" (Applicant: Sony Corp., Inventor: Akihiko Yamagata et al.).
In this conventional technology, a hierarchical structure is introduced into memory areas of an IC card, by which applications allocated to the memory areas are entered into directories and the memory areas are managed in units of a directory so as to achieve efficient controls of rights to access to the applications.

As another conventional technology, Japanese Laid-Open Patent Publication (Kokai) No. 2003-122646 published on April 25, 2003 discloses "IC Card and IC Card Memory Access Control Method" (Applicant: Nippon Telegraph and Telephone Corp., Inventor: Kazu Yoshida).
This conventional technology is an access control method of rapidly eliminating inconsistencies in memory areas when power in process is turned off at data rewriting in the IC card memory or a garbage collection.

Furthermore, as a conventional technology related to a memory access control in a fingerprint authentication unit using an IC card or the like, Japanese Laid-Open Patent Publication (Kokai) No. 2003-85149 published on March 20, 2003 discloses "Fingerprint Authentication Unit and Authentication System" (Applicant: System Needs Corp., Inventor: Keisuke Nakayama et al.).
This conventional technology is an authentication system in which a fingerprint authentication unit using an IC card or the like encrypts and retains an access key for accessing data on a memory in a part of the IC card, performs an authentication according to a degree of security of an application, decrypts the encrypted access key, permits access to the data according to the decrypted key, and outputs the data.

In the conventional IC card and the method for use therein, however, data used by various applications are stored in a storage area of the IC card before using the data, and therefore there has been a problem that a wider application range requires a larger amount of storage capacity and thus there is a limit to this.

Furthermore, once a file organization is designed, data might be altered, but it is hard to alter the file organization itself. Therefore, there is a need for withdrawing the IC card once and rewriting the entire data, which leads to a problem of considerably deteriorating the operational convenience.

Still further, for example, if data items for use in an application are added and it causes an increase in the data volume contrary to the initial expectation and an insufficient capacity reserved in a design phase, a file layout need be modified. Thus, this method has a problem of a lack of adaptability to a system modification.

### SUMMARY OF THE INVENTION

The present invention has been provided in view of the above problems. Therefore, it is an object of the present invention to provide an IC card system capable of expanding a storage capacity virtually and flexibly while making the best use of the characteristics of the IC card, facilitating file layout, and ensuring security among applications.

According to one aspect of the present invention, there is provided an IC card system, wherein an IC card stores personal common information, a corresponding encryption/decryption key of extended information for each application, and information on a location of a storage unit storing encrypted information encrypted with the encryption/decryption key, wherein a processor includes the storage unit for storing encrypted information generated by encrypting the extended information, and wherein a control unit executes an application so that: personal common information loading means acquires the personal common information from the IC card and loads it in a memory; management information reading means acquires encryption/decryption key and information on the location of the storage unit storing the encrypted information encrypted with the encryption/decryption key from the IC card; data acquiring means reads the encrypted information from the storage unit on the basis of acquired information on the location, decrypts it with acquired encryption/decryption key, and loads the extended information in the memory; and data processing means treats the personal common information and the extended information loaded in the memory as stored information of the IC card. The IC card system thus has the effects of: capable of making up a high-capacity IC card virtually and flexibly while making the best use of characteristics of the IC card, by efficiently using the memory on the IC card 1 expensive and small in capacity; facilitating file layout in the IC card and thereby reducing hardware cost of the IC card; ensuring security among applications; and preventing important data from being stolen directly from the IC card and thus improving the safety.

In the IC card system of the present invention, the IC card stores an access key for accessing virtual area management information in such a way as to correspond to the virtual area management information, which is composed of the encryption/decryption key of the extended information for each application and information on the location of the storage unit storing the encrypted information encrypted with the encryption/decryption key and has processing means for reading and outputting virtual area management information corresponding to the access key in response to a read request with an access key from the outside. Moreover, management information reading means of the processor retains the access key corresponding to the virtual area management information of the extended information to which an access is previously permitted, sends the read request with the access key to the IC card when acquiring the virtual area management information from the IC card, and acquires the virtual area management information returned from the IC card. The IC card system thus has effects of enabling operations of various applications with a single card by using an IC card inexpensive and small in capacity and achieving an establishment of a firewall for each application since the virtual area management information on the extended information for use in other applications is completely masked.

In the IC card system of the present invention, the IC card has processing means for reading the encrypted key for accessing the file of the relevant virtual area management information from a table in response to a request from an application, decrypting the encrypted key by using a cipher key in a master file, accessing each file, and outputting the virtual area management information of the relevant file. The IC card system thus has effects of enabling operations of various applications with a single card by using the IC card inexpensive and small in capacity and achieving an establishment of a firewall for each application since the virtual area management information on the extended information for use in other applications is completely masked.

In the IC card system according to the present invention, the processor stores encrypted information generated by encrypting personal authentication information for authenticating personal identity as extended information in the storage unit, and the control unit includes authentication means for authenticating personal identity by using the personal authentication information of the extended information loaded in the memory through the executed application and for enabling the respective means if the authentication is successful. Therefore, it is possible to encrypt and retain the personal authentication information in the location of the storage unit managed as virtual area management information. Thus, the IC card system has an effect of enabling a personal authentication without the personal authentication information retained in the IC card.
Moreover, the personal authentication information can be additionally stored in the storage unit and therefore it is possible to store the personal authentication information afterward in the location in the storage unit managed as virtual area management information. Thus, the IC card system has an effect of facilitating system planning.

In the IC card system according to the present invention, the processor includes a terminal and a plurality of servers connected to the terminal via a network, the encrypted information generated by encrypting the extended information is stored in databases in the plurality of servers, and if the information on the storage location of the encrypted information acquired by the management information reading means indicates a database in a specific server, the data acquiring means of the control unit requests the specific server to read out the encrypted information and the specific server reads out the encrypted information from the database in response to the request and sends it to the data acquiring means. Therefore, it is possible to make up an IC card virtually having a large capacity by efficiently using the memory on the IC card, which is expensive and small in capacity, and making the best use of the characteristics of the IC card in files placed in various places in the network. Furthermore, the hardware cost of the IC card can be reduced by facilitating the file layout in the IC card, and various applications can be operated with a single card. Thus, the IC card system is very effective.

According to the present invention, biometric authentication data such as a fingerprint or features (something you are) and a signature (something you do) may be added in the virtual storage area managed as virtual area management information, in addition to the current personal authentication using an IC card (something you have) and a password (something you know). This causes an effect of flexible, inexpensive, and speedy configuration of a multi-element authentication system.

### BRIEF DESCRIPTION OF THE DRAWINGS

Fig. 1 is a block diagram showing a basic illustrative configuration of an IC card system according to an embodiment of the present invention.

Fig. 2 is an explanatory diagram showing an illustrative file organization of an IC card 1 of the present invention.

Fig. 3 is a diagram showing a configuration of means for an application executed by a processor in the IC card system of the present invention.

Fig. 4 is a flowchart showing a processing flow in a control unit.

Fig. 5 is a flowchart showing an operative example of an authentication process 100 in the flow shown in Fig. 4.

Fig. 6 is an explanatory diagram showing a data flow in the IC card system of the present invention.

Fig. 7 is an outline view of an intelligent authentication unit.

Fig. 8 is a block diagram of the fingerprint authentication unit.

Fig. 9 is a diagram showing a configuration of an embodiment of the IC card system of the present invention.

Fig. 10 is a file organization and illustrative stored data in the IC card in the embodiment shown in Fig. 9.

Fig. 11 is an explanatory diagram showing an illustrative data organization in a memory area in the IC card.

### Description of Reference Numerals

- 1: IC card
- 2: IC card reader/writer
- 3: Processor
- 4: Server
- 5: CPU
- 6: ROM
- 7: RAM
- 8: Nonvolatile memory (EEPROM)
- 10: Device identifier
- 11: Personal common information
- 12: Virtual area management table
- 12a: Access key
- 12b: Encryption/decryption key
- 12c: File location information
- 30: Control unit
- 30a: Authentication means
- 30b: Personal common information loading means
- 30c: Management information reading means
- 30d: Data acquiring means
- 30e: Decryption means
- 30f: Data storage means
- 30g: Encryption means
- 30h: Data processing means
- 31: ROM
- 32: Memory
- 33: Storage unit (HDD)
- 34: Input-output unit (KB/CRT)
- 35: Input-output interface (IO)
- 36: Communication interface (IO)
- 100: Fingerprint sensor
- 200: Terminal for external connection interface unit
- 110: Fingerprint collation unit
- 111: Common control unit
- 112: Collation control unit
- 113: FACCT
- 114: Fingerprint sensor unit
- 120: IC card unit
- 121: IC card CPU
- 122: MF
- 123: DF
- 124: Fingerprint template file
- 125: Voice and face template file
- 126: Personal information unit
- 130: Interface unit
- 140: Processor (host)

### DETAILED DESCRIPTION OF THE PREFERRED EMBODIMENTS

The preferred embodiments of the present invention will now be described in detail hereinafter with reference to the accompanying drawings.
Function enabling means described hereinafter may be any circuits or apparatus only if they can enable the relevant functions. Moreover, a part or all of the functions can be attained using software. Furthermore, the function enabling means may be realized by means of a plurality of circuits, or a plurality of function enabling means may be realized by means of a single circuit.
An encryption system is not limited to a specific one. While a public key is preferable, a common key or any other system may be used.

In an IC card system of the present invention, an IC card stores an access key as virtual area management information combined with its corresponding encryption/decryption key of information indicating a location of a virtual storage area and data stored in the location. Each application has the access key for accessing the virtual area management information on the IC card, acquires the encryption/decryption key of the information indicating the location of the virtual storage area and the data stored in the relevant location corresponding to the access key, decrypts the encrypted data read from the acquired location of the virtual storage area using the acquired encryption/decryption key and loads it in the memory for use. In updating, data encrypted with the acquired encryption/decryption key is stored in the location of the virtual storage area for updating. Thereby, the storage area in the IC card can be virtually expanded.

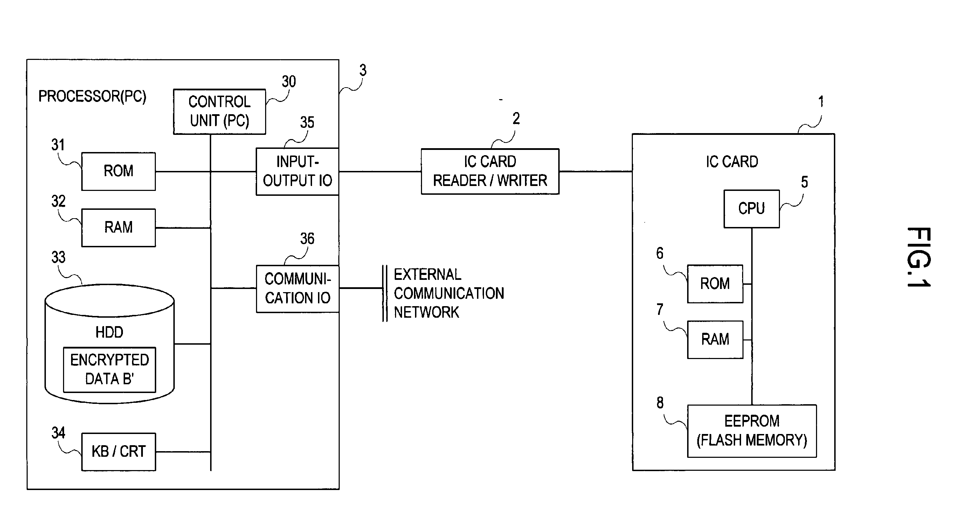

First, a basic configuration of the IC card system of the present invention will be described with reference to Fig. 1. Referring to Fig. 1, there is shown a block diagram of a basic illustrative configuration of the IC card system according to an embodiment of the present invention.
As shown in Fig. 1, the basic configuration of the IC card system in this embodiment comprises an IC card 1 storing virtual area management information, an IC card reader/writer 2 for performing a read/write operation on the IC card 1, and a processor 3 for performing various processes using information stored in the IC card 1.

The IC card 1 is basically an ordinary one with an IC chip. The IC chip contains a CPU 5 for analyzing an input signal from the outside, performing processes, and outputting results of the processes to an IC card reader/writer 2, a ROM 6 storing an OS and applications, a RAM 7 as a work memory, and a nonvolatile memory (EEPROM) 8 storing user data. Some chips contain a flash memory instead of the EEPROM, however. In some cases, an application is stored in the EEPROM 8.

While the IC card 21 of the present invention has a normal basic configuration, the characterizing portion of the present invention exists in a file organization of information stored in the EEPROM 8 and an operation is controlled as if there were a virtual storage area besides a storage area (a physical storage area) of the EEPROM 8 in the IC card 1 by an action of a control unit 30 on the processor 3 described later. Therefore, it is referred to as a virtual IC card.

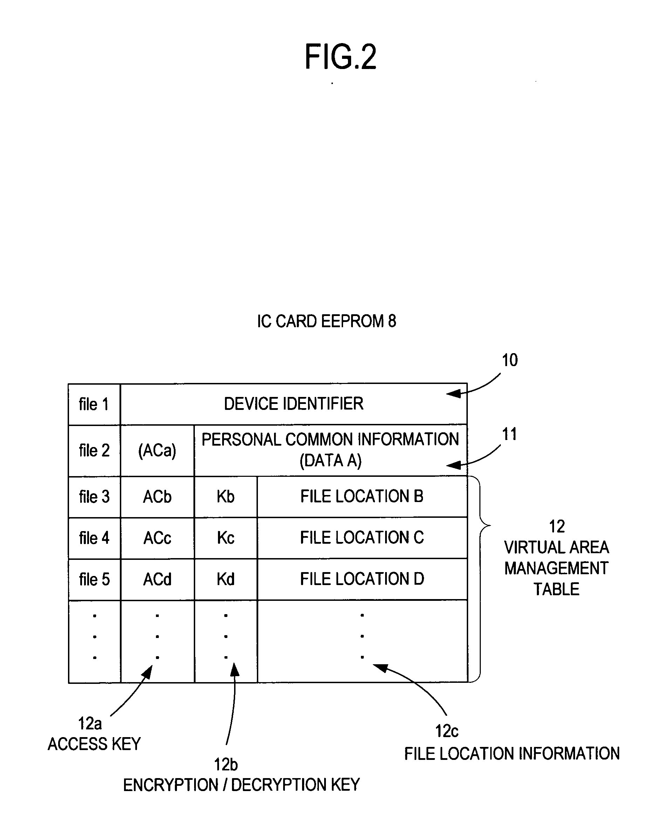

An illustrative file organization in the EEPROM 8 of the IC card 1 of the present invention will be described below with reference to Fig. 2. Referring to Fig. 2, there is shown an explanatory diagram of an illustrative file organization of the IC card 1 of the present invention.
For example, the file organization of the IC card 1 of the present invention has a device identifier 10, personal common information 11, and a virtual area management table 12, and each information (each record in the case of the table) is stored in the form of a file.

The device identifier 10 is an identifier for use in identifying the IC card uniquely all over the world as has been conventional and is identification information such as a number or the like managed by an issuer of the IC card.
Personal common information (data A) 11 is basic information on an individual owning an IC card and is information used in common by a plurality of applications using the IC card (referred to as personal common information). Specifically, for example, it includes the name, date of birth, sex, and the like and information for use in the personal authentication of the card holder (a personal ID and a password, or simply a personal identification number, etc.).

The virtual area management table 12 is a file, for example, in a table format for storing management information on a virtual area (virtual area management information).
In this regard, the virtual area management information includes an access key 12a, which is an identification code for accessing the management information in units of data, an encryption/decryption key 12b as a cipher key for encrypting or decrypting data, and information indicating a location where an encrypted data file is stored (file location) 12c.

The IC card 1 is formatted in an IC card issuing server operated and managed by an IC card issuer. Then, as shown in Fig. 2, there are written into the IC card 1 a device identifier 10 of a unique number, an access key ACa for personal common information and the personal common information (data A) 11, and a virtual area management table 12 composed of an access key 12a, an encryption/decryption key 12, and file stored location information 12c for each data (file), on the basis of the internal layout of the file organization.

Note here that, however, the access key ACa for the personal common information need not always be provided if the security of the personal common information is treated as unimportant.
When the IC card 1 (virtual IC card) of the present invention is issued, an IC card issuing server encrypts each data in an arbitrary encryption system by using the encryption/decryption key stored in the virtual area management table 12 and writes it in a specified location stored in the virtual area management table 12.

In the present invention, the CPU 5 of the IC card 1 provides processing means for performing authentication processing including a general device authentication and a personal authentication and read processing of the virtual area management information stored in the EEPROM 8.
Particularly, in the read processing of the virtual area management information, an access key of a specified file is collated in response to a read request with an access key from an application to be executed by the control unit 30 of the processor 3 described later. If there is no matching access key, "mismatch" is returned to the application. Otherwise, the encryption/decryption key 12b in the virtual area management information in the relevant file and the information 12c indicating the storage location of the encrypted data file (file location) are returned to the application.

An IC card reader/writer 2 in Fig. 1 is a general IC card reader/writer, which supplies power to the IC card 1 and reads or writs data from or to the IC card 1.
The IC card reader/writer 2 may be either of a contact type or of a non-contact type.
If the IC card reader/writer 2 is far from an input-output unit 34 of the processor 3, the IC card reader/writer 2 may be provided with a dedicated input device (PIN pad).

The processor 3 is a general processor such as a personal computer (PC), which is connected to the IC card reader/writer 2 via an input-output interface to execute an application using the IC card 1 through a data input or output with the IC card 1 installed in the IC card reader/writer 2.

An illustrative internal configuration of the processor 3 of the present invention will be briefly described here.
The processor 3 of the present invention comprises a control unit 30 equivalent to the CPU for executing various processes with an OS and applications loaded, a ROM 31 storing programs of the OS and applications executed by the control unit 30, a memory (a RAM in Fig. 1) 32 as a temporary working storage, a storage unit (an HDD in Fig. 1) 33 such as a hard disk (HDD) storing programs of various applications and various data, an input-output unit (KB/CRT in Fig. 1) 34 such as a keyboard (KB), a mouse, or a display (CRT) for inputting or outputting data for a user, an input-output interface (input-output IO in Fig. 1) 35 for inputting or outputting data with being connected to the IC card reader/writer 2, and a communication interface (communication IO in Fig. 1) 36 for sending or receiving data to or from an external communication network.

While the above itself is a general configuration as a processor, a feature of the IC card system of the present invention resides in the application program stored in the storage unit 33 and loaded in the control unit 30 for execution, a data organization loaded in the memory 32 by an action of the application program, and a type of data stored in the storage unit 33.

The characterizing portions will be described hereinafter.
The storage unit 33 stores data (referred to as extended information) for forming the virtual storage area in the IC card 1 in an encrypted condition (referred to as encrypted information).
For example, it is assumed that data B' in the storage unit 33 shown in Fig. 1 exists in an area specified by a file location B on the virtual area management table 12 in the IC card 1 described with reference to Fig. 2 and data encrypted with an encryption/decryption key Kb (encrypted information) is stored there.
The IC card issuing server of the IC card 1 initially writes the encrypted data B'. Sometimes, however, data is updated during execution of the application described later.
While the storage unit 33 is described here by giving an example of the hard disk drive (HDD), it can be a Floppy^{TM} disk drive (FDD) , a magnetic optical disk (MO), a removable disk, a nonvolatile memory card, or the like.

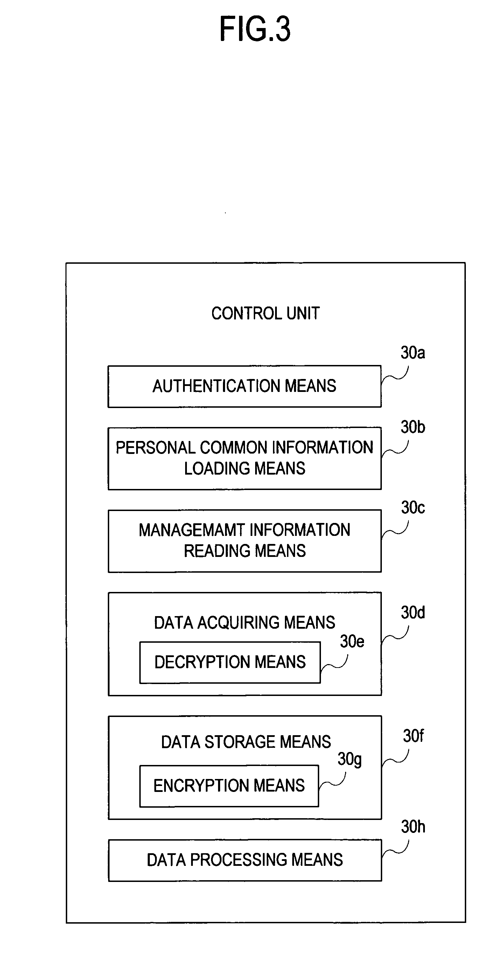

Subsequently, the application executed by the control unit 30 will be described with reference to Fig. 3. Referring to Fig. 3, there is shown a diagram of a means structure of the application executed in the processor 3 in the IC card system of the present invention.
The application executed in the control unit 30 of the processor 3 in the IC card system of the present invention comprises authentication means 30a, personal common information loading means 30b, management information reading means 30c, data acquiring means 30d provided with decryption means 30e, data storage means 30f provided with encryption means 30g, and data processing means 30h.

The authentication means 30a performs a series of authentications before the IC card system is used and permits the executions of the proper means of the IC card system if all the authentications are successful.
The authentications are, for example, an authentication of a manager who operates the application (operator authentication), an authentication of the IC card 1 inserted in the IC card reader/writer 2 (device authentication), and an authentication of a holder of the IC card 1 (a card holder) (personal authentication).
In this application, the authentication means is not limited to specific one, but it is arbitrary to perform which authentication or to use what method in each authentication. A concrete example will be briefly described hereinafter.

The operator authentication is to authenticate a person who executes (operates) an application by determining whether he/she is an identical person who is permitted to execute the application. It is a general authenticating process including an input of a user ID and a password from a keyboard and collation of a permitted ID previously registered and its password. For an application having high security in treating data, a biometric authentication (fingerprint authentication, a voiceprint authentication, a retina authentication, etc.) may be performed, if necessary. If so, it is necessary to previously store various corresponding biometric authentication data in the processor 3, an authentication server (not shown in Fig. 1), the IC card, or the virtual storage area and to provide the processor 3 with a configuration for reading biometric data.
In this regard, if the IC card system has a configuration in which the biometric authentication data is stored in the virtual storage area, a user can add the biometric authentication data afterward, thereby enabling an expansion of the personal authentication system.

The device authentication is to authenticate the IC card 1 inserted in the IC card reader/writer 2 by determining whether it is a counterfeit card or to authenticate the processor 3 by determining whether it is a counterfeit terminal to the contrary.
Concrete authentication methods include a method in which the IC card 1 and the processor 3 generate coded messages for an authentication, respectively, and exchange and check them by using the device identifier 10 stored in the IC card 1 described above and a method using a mechanism in which the IC card 1 performs a two-way authentication with the host computer (the IC card issuing server) connected through the network via the processor 3 by using the device identifier 10. For the two-way authentication between the IC card and the host computer, there is also a method referred to as EMV specification, which is a standard specification of the IC credit cards.

The personal authentication is to authenticate a person who inserted the IC card 1 by determining whether he/she is the holder of the card (card holder). The general method is to collate information for the personal authentication (a personal ID and a password or simply a personal identification number, etc.) stored in the personal common information 11 in the IC card 1 described above with input information from the dedicated input device (PIN pad) or the like connected to the input-output unit 34 of the processor 3 or the IC card reader/writer 2.
For an application and the IC card 1 having high security in treating data, a biometric authentication (a fingerprint authentication, a voiceprint authentication, a retina authentication, etc.) may be performed, if necessary. If so, it is necessary to previously store various corresponding biometric authentication data in the IC card or the virtual storage area of the processor 3 and to provide the IC card 1 or the processor 3 with a configuration for reading biometric data.
Moreover, the biometric authentication data can be added to data in the virtual storage area of the processor 3 afterward.

In the authentication means 30a, the device identifier 10 and the personal common information 11 may be read from the IC card 1 and loaded in the memory 32 before execution of various authentications.

The personal common information loading means 30b operates if all authentications in the authentication means 30a are successful or before the personal authentication in the authentication means 30a and then reads the personal common information 11 from the IC card 1 and loads it in the memory 32.
Specifically, if the access key ACa is preset to the personal common information 11 of the IC card, the personal common information loading means 30b previously retains the access key ACa and outputs a personal common information read request to the IC card 1 together with the access key ACa. If the output access key matches the access key stored in the IC card 1, it acquires the personal common information 11 and loads it in the memory 32.
If the security of the personal common information1 11 is treated as unimportant and the access key is not preset, the personal common information loading means 30b outputs the personal common information read request to the IC card 1 without the access key.

The management information reading means 30c operates if all authentications in the authentication means 30a are successful and then reads the management information in the virtual area from the IC card 1.
Specifically, the management information reading means 30c, which previously retains an access key (for example, ACb) of the required management information, outputs a management information read request to the IC card 1 with the access key ACb and acquires virtual area management information of a file where the output access key matches the access key stored in the IC card 1 (the encryption/decryption key 12b and the information 12c indicating the file storage location).

The data acquiring means 30d loads the data stored in the virtual storage area into the memory 32.
Specifically, the data acquiring means 30d acquires the encrypted data from the storage location according to the information 12c indicating the file storage location read by the management information reading means 30c, decrypts it by means of the decryption means 30e using the encryption/decryption key 12b read by the management information reading means 30c, and loads it into an area contiguous to the area where data A is already loaded in the memory 32.
The decryption performed by the decryption means 30e presupposes that the decryption corresponds to the encryption in the encryption means 30g described later and to the encryption in the IC card issuing server described above.

The data storage means 30f stores the data loaded in the memory 32 into the virtual storage area.
Specifically, the data storage means 30f generates encrypted information by encrypting data, which has been loaded in the memory 32 by the data acquiring means 30d and updated in the course of the application processing, by the encryption means 30g with the encryption/decryption key 12b read by the management information reading means 30c and stores the encrypted information in the storage location according to the information indicating the file storage location read by the management information reading means 30c.
The encryption method used by the encryption means 30g is the same encryption method as for the encryption in the IC card issuing server described above and presupposes that the encryption corresponds to the decryption in the decryption means 30e in the above.

The data processing means 30h is application-specific data processing means. The personal common information loading means 30b and the data acquiring means 30d cause the personal common information (data A) and the extended information (data B) to be loaded contiguously in the memory 32, as if there were data areas of the IC card 1 on the memory 32. The data processing means 30h reads data from these areas to perform data processing by treating data B in the same manner as has been in the conventional method in which the data B is stored in the IC card 1.
Upon end of the processing or detecting an unreadable condition caused by an extraction of the card, the data processing means 30h erases the data A and the data B loaded in the memory 32.

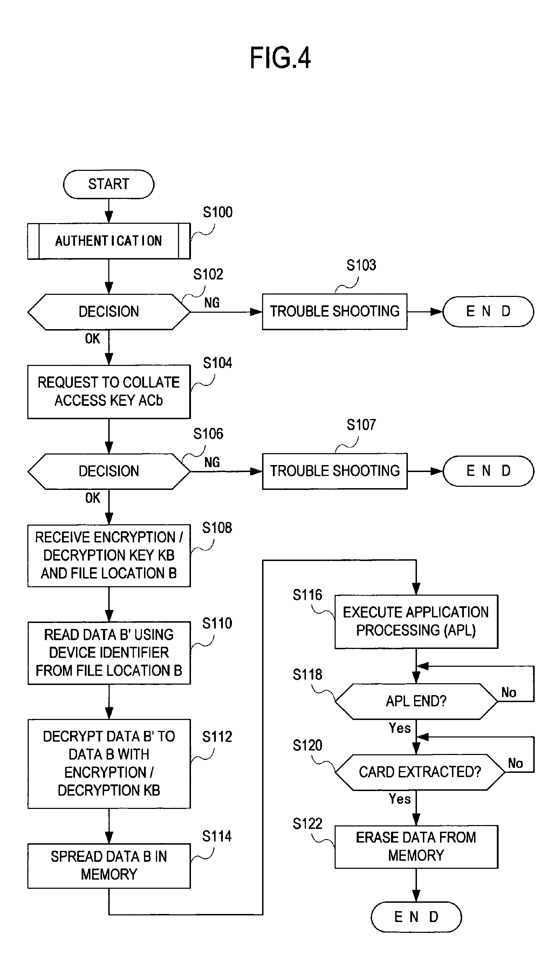

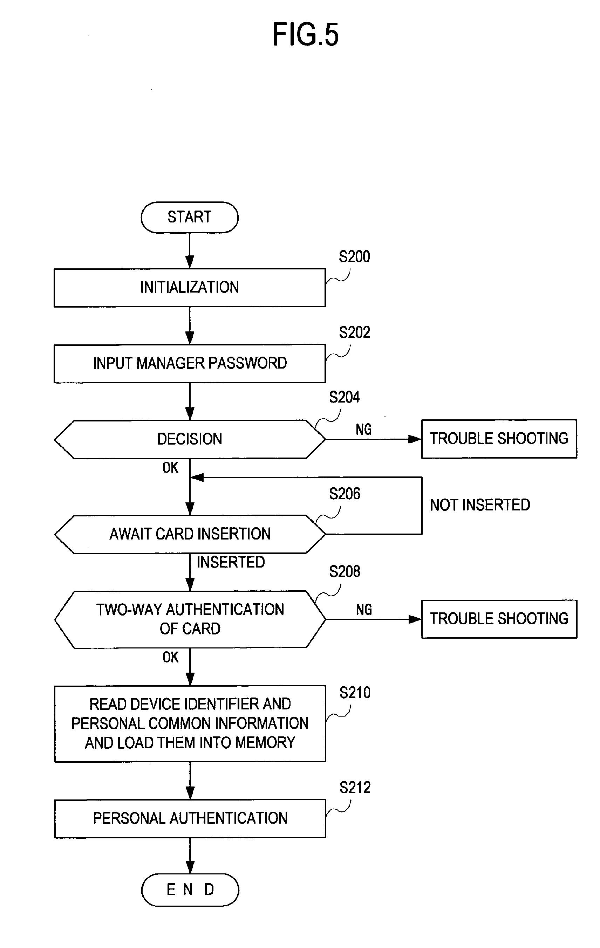

The following describes a specific flow of the handling operations of the means performed in a single application in the control unit 30 of the processor 3 of the present invention with reference to Figs. 4 and 5. Referring to Fig. 4, there is shown a flowchart of a processing flow in the control unit 30. Referring to Fig. 5, there is shown a flowchart of a concrete example of the authentication process 100 in the flow in Fig. 4. Fig. 5 shows an example of an application for accessing the data B of the IC card 1 shown in Fig. 2.

When the application is started, the control unit 30 of the processor 3 of the present invention performs a prior authentication process as an operation of the authentication means 30a (S100) as shown in Fig. 4, first, determines a result of the authentication process (S102). If a mismatch is detected at any authentication (NG), the authentication is determined unsuccessful and processing terminates after trouble shooting (S103).

On the other hand, if all various authentications are successful (OK) in the process 102, the management information reading means 30c requests the IC card 1 to collate the access key ACb previously retained and to read the management information (S104). In this regard, the collation of the access key is a process of outputting the access key ACb previously retained in the application to the IC card 1 and collating the access key ACb with the access key 12a in the virtual area management table 12 of the IC card 1: if any access key matches the access key ACb, the matching is considered successful, otherwise it is considered unsuccessful.

Then, the control unit 30 receives and determines the result of the access key collation (match or mismatch)(S106). If the result is determined to be a mismatch, the control unit 30 performs trouble shooting (S107) and terminates the processing.
On the other hand, if the result of the access key collation is determined to be a match in the process 106, the control unit 30 receives the encryption/decryption key Kb in the virtual area management information corresponding to the access key ACb and information B indicating the file storage location (S108).

Then, the data acquiring means 30d reads and acquires the encrypted data B' from the file storage location B (the storage unit 33 in Fig. 1) (S110), decrypts the data B' to the data B (S112) by the decryption means 30e, and loads the data B in the memory 32 (S114).

Then, if an environment is put in place for treating the data A loaded by the authentication means 30a and the data B loaded by the data acquiring means 30d in the memory 32 as if they were storage areas of the IC card 1, an application-specific process is executed (S116), and the application terminates (S118), the control unit 30 calls for an extraction of the card. Upon detecting an unreadable condition caused by the card extraction (S120), it erases the data A and the data B loaded in the memory 32 (S122) and terminates the application.

In the above flowchart, write processing of data is omitted since it will not always occur. If an update occurs in the data B in the memory 32, however, the data storage means 30f operates every time the update occurs, when a write operation is performed, or at an end of the application. Thereby, the encryption means 30g encrypts the updated data B in the memory 32 to the data B' with the encryption/decryption key Kb. Then, the encrypted update data B' is written into the file storage location B (the storage unit 33 in Fig. 1).

In the process S100 in Fig. 4, as shown in Fig. 5, the control unit 30 performs initialization of the application (S200)**,** inputs a manager password for an operator authentication (S202), determines whether the password matches with a previously registered password (S204), performs trouble shooting (S205) if the matching is unsuccessful, and terminates the processing.
If the matching is successful, the control unit 30 calls for an insertion of the IC card 1. Upon the insertion of the card (S206), it then performs the two-way authentication between the IC card 1 and the IC card reader/writer 2, the processor 3, or the host computer (IC card issuing server) as the device authentication (S208). If the authentication is unsuccessful (NG), it performs trouble shooting (S209) and terminates the processing.

If the card two-way authentication is successful (OK), the control unit 30 reads the device identifier 10 and the personal common information (data A) 11 from the IC card 1, loads it in the memory 32 (S210), and performs the personal authentication (S212). The flow is based on the premise that the personal common information (data A) 11 is not provided with the access key. If it is provided with the access key, a request is made to collate the access key ACa retained in the control unit 30 with the access key stored in the IC card 1 before the process 210. After the match is confirmed as a result of the collation, the personal common information 11 can be read out.

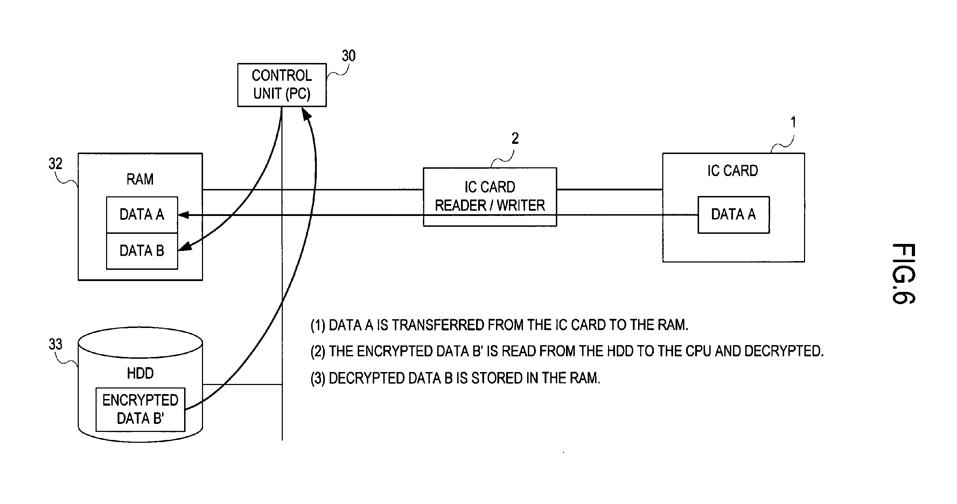

Subsequently, an operation of the IC card system of the present invention will be described below with reference to Fig. 6. Referring to Fig. 6, there is shown an explanatory diagram of a data flow in the IC card system of the present invention.
In the IC card system according to the present invention, the IC card 1 is previously formatted by the IC card issuing server and various information is written into it in the arrangement shown in Fig. 2. Particularly, regarding the data B, the access key ACb, the encryption/decryption key Kb, and the file location B are written.
Moreover, the IC card issuing server encrypts the data B with the encryption/decryption key Kb in an arbitrary encryption system and writes the encrypted data B' in the specified location B (the storage unit 33) of the processor 3. The application executed by the control unit 30 of the processor 3 is previously provided with the access keys ACa and ACb for accesses to file 2 (data A) and file 3 (data B), respectively.

When the IC card 1 is used, the control unit 30 of the processor 3 executes the application to conduct various authentications. Thereafter, the access key ACa of the file 2 (data A) is output to the IC card 1, first. If the access key ACa matches the access key stored in the IC card 1 successfully, the personal common information (data A) 11 is read from the IC card 1 and loaded in the memory 32 of the processor 3 (1).

Subsequently, the access key ACb of the file 3 (data B) is output to the IC card 1. If the access key ACb matches the access key stored in the IC card 1 successfully, the virtual area management information on the data B (the encryption/decryption key Kb and the file location information B) is read from the IC card 1. The control unit 30 reads the encrypted data B' from the file location information B (the storage unit 33 of the processor 3 in the diagram) (2) and performs decryption processing for the encrypted data by using the encryption/decryption key Kb and loads the decrypted data B in the area contiguous to the data A of the memory 32 (3).
Through the above operation, the data A and the data B are stored in the contiguous areas in the memory 32. Thereby, the data areas are achieved in the memory 32 as if they were data areas of the IC card 1. By reading data from these areas, the data B (the encrypted data B'), which is stored in the area other than the area in the IC card 1, can be treated in the same manner as in the conventional method in which the IC card 1 stores the data B.

On the other hand, for example, if another application using the same IC card 1 uses data C, the application is previously provided with the access keys ACa and ACc for accesses to the file 2 (data A) and file 4 (data C). By the same operation as for the above, the data C (encrypted data C') stored in the outside of the IC card 1 can be loaded in the area contiguous to the data A on the memory 32, so that the data can be treated in the same manner as in the conventional method in which the data C is stored in the IC card 1.

While the personal common information (data A) 11 is directly stored in the file 2 in the file organization shown in Fig. 2, the personal common information 11 may have the same arrangement as for the virtual area management table 12. In other words, the access key 12a, the encryption/decryption key 12b, and the file location information 12c are stored and the file location information 12c indicates another file location in the IC card 1 in the same manner as for the conventional file organization shown in Fig. 11.

In the file organization shown in Fig. 2, every extended information is stored in a location other than the IC card 1. Regarding particular extended information (for example, extended information having an extremely high security level or the like), however, the extended information may be encrypted and stored in a file location indicated by the file location information 12c as another file location in the IC card 1.
In this case, the CPU in the IC card 1 reads the encrypted extended information from the file location information 12c, decrypts it with the encryption/decryption key 12b, and outputs it to the processor 3 as has been conventional.

In the configuration shown in Fig. 1, the encrypted extended information (encrypted information, for example, the data B') is stored in the storage unit 33 such as a hard disk drive of the processor 3 executing the application. It is, however, possible to store it not only in the processor 3, but, for example, in a database or the like in a specific server, which can be connected via the network through the communication interface 36.
In this regard, the communication interface 36 of the processor 3 and the network described here can be a modem and a public circuit, a local area network (LAN), a radio LAN board and a LAN, a wide area network (WAN), or Bluetooth^{TM}.

If the encrypted information generated by encrypting the extended information is stored in the database on the server via the network, the file location information 12c in the virtual area management information stored in the IC card 1 indicates a database location in the specific server (for example, URL). The data acquiring means 30d of the control unit 30 requests the specific server indicated by the file location information 12c to read the encrypted information. In response to the request, the server reads the encrypted information from the database indicated by the file location information 12c and sends it to the data acquiring means 30d.

The data storage means 30f of the control unit 30 sends a write request of the encrypted information to the specific server, on the basis of the information on the location of the acquired encrypted information. In response to the write request, the specific server stores the encrypted information into the database indicated by the information on the location of the encrypted information.

While single extended information treated in the application has been described in the illustrative operation in Fig. 6, the arrangement may be such that multiple extended information is treated.
For example, if there are two pieces of extended information, the application is previously provided with access keys ACa, ACb, and ACc for accesses to the file 2 (data A), the file 3 (data B), and the file 4 (data C). Thereby, after loading the data B, the control unit reads encrypted data C' from the file location information C (not shown), performs decryption processing for the encrypted data by using the encryption/decryption key Kc, and loads the decrypted data C in the area contiguous to the data A and the data B of the memory 32, regarding the data C.

According to the IC card system of the present invention, information specific to the application (extended information) is encrypted and stored in the storage unit 33 of the processor 3. Thereafter, when the IC card 1 is used, the control unit 30 of the processor 3 acquires the virtual area management information (information indicating the encryption/decryption key and the virtual storage area location) stored in the IC card 1, reads the encrypted extended information from, for example, the storage unit 33, which is the virtual storage area location, decrypts it with the encryption/decryption key and loads it in the memory 32. Thereby, the information can be treated as if it were data stored in the IC card 1. The IC card system is thus capable of achieving a virtually high-capacity IC card while making the best use of the characteristics of the IC card by efficiently using the memory on the IC card 1 expensive and small in capacity and of operating various applications by using an IC card inexpensive and small in capacity, thereby having an effect of reducing the hardware cost of the IC card.

Moreover, since data need not be directly stored in the IC card in the present invention, important data is not stolen directly from the IC card in case of loss of the IC card carried at all time in most cases. Thus it has an effect of improving the security.

Furthermore, in the present invention, virtual area management information (information on the access key, the encryption/decryption key, and the file location) is set in units of data corresponding to each application, the data storage location encrypted by a certain encryption/decryption key is set arbitrarily, and the access to the information is limited by the access key. Thus, the IC card system can give only specific and accessible virtual area management information by using the access key, which is previously retained by the relevant application, to the application different in use from other applications. Therefore, it enables a card layout in which a user can use a plurality of applications with a single card and the virtual area management information on the extended information used in other applications is completely masked, thereby ensuring security among the applications.

Still further, since practical extended information is not stored in the IC card 1 in the above, a firewall is established in units of an application and therefore the present invention has an effect of improving individual data security remarkably.

Furthermore, the extended information stored in various places other than the IC card 1 is encrypted with each corresponding encryption/decryption key when it is stored. Therefore, for example, even if the extended information is taken out independently, it cannot be decrypted without the corresponding encryption/decryption key in the application and the IC card 1. Thus, the present invention has an effect of ensuring the security.

Moreover, in the present invention, only the extended information used by the application is read and decrypted or encrypted and written. Therefore, it has an effect of improving the application performance.

In the IC card system of the present invention, for example, even if treated data items are increased by a system modification or the like in the application side and the entire volume of the (encrypted) extended information stored in the outside of the IC card 1 bulges unexpectedly, the IC card 1 stores only information on the file locations and therefore there is no need to modify the file layout or the like in the IC card 1 as has been conventional. Thus, it is possible to cope with the system modification flexibly and the present invention has an effect of facilitating the initial file layout.

Furthermore, for example, in the case of changing the storage location of the (encrypted) extended information stored in the outside of the IC card 1, it is only necessary to rewrite the information on the file location in the virtual area management information in the IC card 1. Therefore, it is possible to cope with the situation only with the data modification and to cope with the system modification with a simple method. Thus, the present invention has an effect of facilitating the initial file layout.

Moreover, if a new application using the IC card 1 is introduced and new extended information is needed, it is only necessary to store encrypted extended information in the outside of the IC card 1 and to additionally enter virtual area management information (the access key, the encryption/decryption key, and file location information) in the IC card 1. Therefore, only if an enough area for entering the virtual area management information is secured by reservation, it is possible to cope with the situation only by data modification. Thus, the present invention has an effect of flexibly coping with the system extension.
How the data is modified specifically is described later.

The following describes a second embodiment in which the IC card 1 according to the present invention is applied to an intelligent authentication unit (IAU).
In the IC card system according to the second embodiment of the present invention, the IAU is used instead of the IC card 1. Therefore, in the system configuration shown in Fig. 1, the IC card 1 is replaced with the IAU and it involves a slight difference from the first embodiment in the operation of the application executed by the control unit 30 of the processor 3.

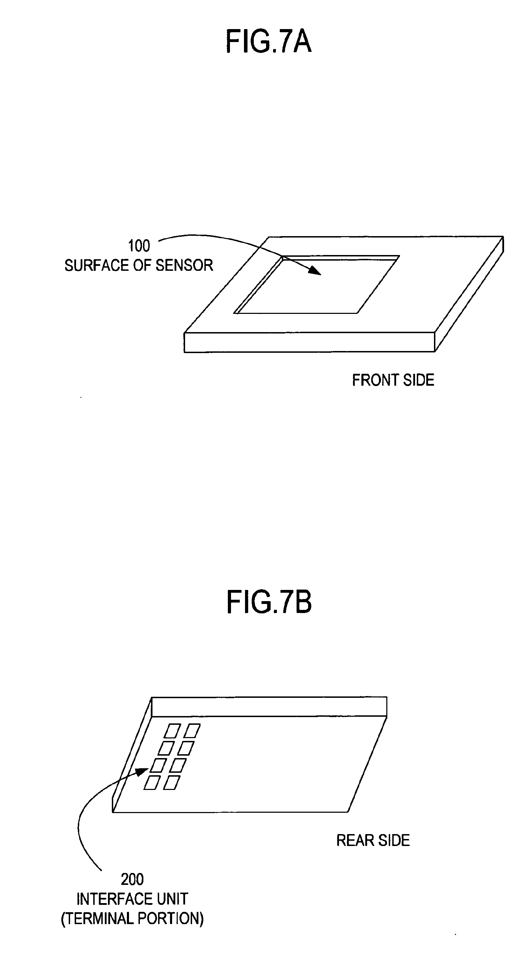

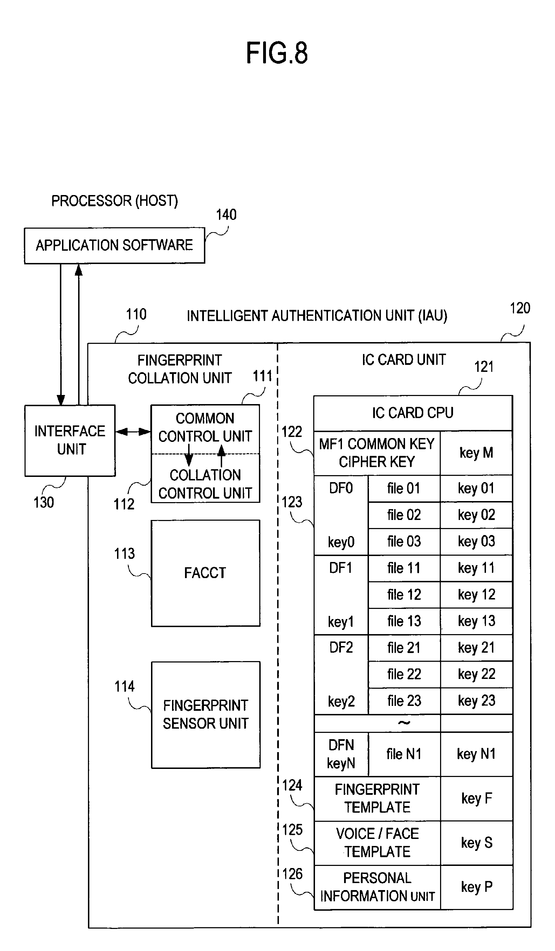

First, the IAU will be briefly described with reference to Figs. 7 and 8. Referring to Fig. 7, there is shown an outline view of the IAU. Referring to Fig. 8, there is shown a block diagram of the fingerprint authentication unit. Details of the IAU are disclosed in detail in Japanese Laid-Open Patent Publication (Kokai) No. 2003-85149 titled "Fingerprint Authentication Unit and Authentication System" (Applicant: System Needs Corp., Inventor: Keisuke Nakayama et al.).

The IAU is shaped as a thin box as shown in Fig. 7. For example, it is provided with a fingerprint sensor 100 on its surface as shown in Fig. 7(a) and with a terminal 200 of an external connection interface unit on its rear face as shown in Fig. 7(b). Fingerprint collation is performed in this unit, and according to a result of the authentication the appropriate data is acquired from a plurality of data stored inside and then transferred.

As shown in Fig. 8, the IAU internally comprises: a plurality of data files (DF) 123 for storing data corresponding to applications; a fingerprint template file 124 for storing fingerprint data; a master file (MF) 122 for storing a cipher key for decrypting a key for an access to each file stated above; an IC card CPU 121 for inputting the encrypted key, decrypting it with the cipher key in the master file, accessing each file in the above, and executing the processing means for outputting a content of the relevant file; a file access control condition table (FACCT) 113 for storing the encrypted key for accessing the relevant file in response to a request from the application; a fingerprint sensor unit 114 for detecting a fingerprint; and a control unit 111 for reading the encrypted key related to the access to the file corresponding to the request from the application from the FACCT 113, outputting it to the processing means executed by the IC card CPU 121, acquiring fingerprint data from the processing means, collating it with the fingerprint data detected by the fingerprint sensor unit 114, and transferring a result of the collation to the application.

As an operation with the IAU, the IAU collates the fingerprint when the application in a processor 140 requests an acquisition of highly confidential data from an IC card unit 120. If a result of the collation is true at the collation level requested by the application, access to a data file requested by the application is started.

For example, if the result of the fingerprint collation is true in an application fetching data of a file 01 in a DF0 area in the IC card unit 120, the common control unit 111 fetches encrypted Key 0' for accessing the DF0 area by referring to the FACCT 113, outputs it to the IC card CPU 121 of the IC card unit 120. The IC card CPU 121 decrypts the encrypted Key 0' with the cipher key "Key M" of MF1 and permits access to the DF0 area with the decrypted Key 0. Therefore, even if an illegal user reads the Key 0' of the FACCT 113, the user cannot gain access to DF0 unless he/she knows the Key M of the MF1.

Subsequently, the common control unit 111 outputs encrypted Key 01' for accessing the file 01 to the IC card CPU 121 with reference to the FACCT 113. The IC card CPU 121 decrypts the encrypted Key 01' by using the Key M of the MF1 and permits access to the file 01 by using the decrypted Key 01.

The IC card CPU 121 then reads data of the file 01 and outputs it to the common control unit 111. The common control unit 111 further transfers the data to the host 140. If the file 01 data is encrypted, it is decrypted before the transfer to the host 140. If the data is highly confidential, it is effective to transfer the encrypted data to the host 140.

If the IC card 1 according to the present invention is applied to the IAU stated above, for example, in Fig. 8 an encryption/decryption key Ka and a file storage location A of the virtual area management information are set at the file 01 as the file 01 data and the access key is Key 01. Moreover, the application is assumed to have an application interface (API) implemented therein, which is permitted to access only the file 01 of the IAU.

Then, the IAU authenticates personal identity from the result of the fingerprint collation of the card holder. If the personal identity is authenticated, the IAU fetches the encrypted access key for accessing the file storing the required application data from the FACCT 113 and decrypts it with the cipher key "Key M" stored in the MF1 in the IC card unit 120. If the decrypted result matches the access key "Key 01" corresponding to the file 01 as a result of collation, the IAU fetches the encryption/decryption Ka and the file storage location A in the virtual area management information stored in the file 01.

Therefore, the IAU is capable of a personal authentication by collating the fingerprint instead of inputting a password for verifying the personal identity before fetching the encryption/decryption key Ka and the file storage location A stored in the file 01.
Based on the fetched encryption/decryption key Ka and file storage location A, it is possible to fetch predetermined encrypted extended information data in the file storage location A outside the IAU, to decrypt it with the encryption/decryption key Ka, and to use it in an application a. The personal authentication may be performed only by fingerprint collation when using the IAU or by a combination of fingerprint collation and a personal identification number or voice, face, or other biometric authentication.

The following describes a method of modifying various information stored in the IC card 1 according to the present invention.
Originally, an IC card has a function of the personal authentication and thus stores very important data such as, for example, a network password, an electronic certificate, additional information for single sign-on, dialup information, information in an IC card or smart card or in a fingerprint identity token, and an expiration date. Therefore, if the important information is updated, one of the following methods has been adopted conventionally: the IC card is withdrawn once and returned to the identical person after rewriting the data; the card is invalidated and a new card containing updated data is issued to the person.

As is in the IC card 1 of the present invention, however, the information stored in the IC card 1 is not information itself requiring advanced security, like the personal common information 11, but it is the virtual area management information indicating the storage location of the relevant information or the encryption/decryption key. Therefore, when the information is updated, it is desired to provide a simple method of identifying the IC card 1 correctly, distributing updated data via the network, and writing the updated data into the IC card reliably, instead of the time-consuming method of withdrawing or reissuing the card or of issuing a new card.

In this regard, there is provided an environment, having an IC card reader/writer 2, in which a terminal (client) for operating an application for writing data to the IC card 1 is connected to a server for managing updated data via a network and the server is connected to a server of an issuer of the IC card 1 (IC card issuing server).

As data updating information, the IC card 1 stores biometric data and PIN data for a personal authentication, an issuer identifier, an issuer authenticator, and a common key or a public key for an issuer authentication, and a device identifier and a secret key for a device authentication.

When data in the IC card 1 is updated, authentication software of the client operates to read the issuer authenticator from the IC card 1 and to collate it with an issuer authenticator retained in the client for the issuer client authentication (1).
If they match as a result of the collation, the issuer client authentication is considered successful. Then, a user conducts the personal authentication (2) with the IC card 1 by using biometric data or PIN data.

If the personal authentication is successful, then the IC card 1 sends the issuer authenticator from the client to the server for the issuer server authentication (3) in the server.
In the issuer server authentication, the server receives the issuer authenticator output from the IC card 1, decrypts the common key or the secret key for decryption stored in the database (DB) managed by the server, acquires the decrypted issuer identifier, and collates it with the issuer identifier stored in the DB. If they match as a result of the collation, the issuer server authentication is considered successful and the device authentication (4) is then started.

In the device authentication (4) with a challenge response as a first method of the device authentication, the server generates random numbers and sends them to the IC card 1 via the client. The IC card 1 encrypts the random numbers with the secret key for the device authentication and sends the device identifier (or the device identifier encrypted with the common key sent from the server) and the encrypted random numbers to the server via the client. The server decrypts the encrypted random numbers with the public key corresponding to the device identifier (if the device identifier is encrypted, the device identifier decrypted with the common key retained in the server) and collates the decrypted random numbers with the initial random numbers to authenticate the device. If they math as a result of the collation, the device authentication is successful.

If the device authentication is conducted without the challenge response, which is a second method of the device authentication, the IC card 1 generates a device authenticator by encrypting the device identifier with the secret key for the device authentication and sends it to the server via the client. The server receives the device authenticator, acquires the device identifier by decrypting the device authenticator with the public key corresponding to the device authenticator, and collates the device identifier stored in the DB with the decrypted device identifier for the device authentication. If they match as a result of the collation, the device authentication is successful.

If the device authentication terminates appropriately, the server reads the update data encrypted with the public key for the device authentication from the DB and transfers it to the client via the Internet. The client then outputs the encrypted update data to the IC card 1 (5).

Furthermore, the IC card 1 inputs the encrypted update data and decrypts the update data with the secret key for the device authentication in the IC card (6). Then, it rewrites important data in the IC card 1 with the decryption data having been decrypted to update the data (7) .

If the data in the IC card 1 is updated in the above method, the updating operation starts only when several authentications including the personal authentication, the issuer authentication, and the device authentication are successful. Then, update data encrypted with the public key for the device authentication is sent to the server client. The client outputs the encrypted update data that it has received to the IC card 1. The IC card 1 decrypts the update data with the secret key for the device authentication to rewrite data in the IC card 1. Therefore, the device authentication prevents the IC card whose data is to be rewritten with the update data from being taken for another. Even if the update data is eavesdropped, only the IC card 1 having the secret key for the device authentication is capable of decrypting the data. Therefore, it has effects of improving security and enabling the server to update target important data in the IC card 1 via the network.

Data can be easily updated reliably while ensuring the security of the update data for the IC card 1 of the present invention in the above method. Therefore, to cope with an application system modification or application extension, a file organization can be updated after starting the operation, if necessary, by generating a new file of encrypted extended information outside the IC card 1, generating data of a modified file organization or information content of the IC card 1 on the server DB, and updating data in the IC card 1 via the client from the server in the above method.

Furthermore, only if a plurality of areas are prepared for storing information on the data storage location and its encryption/decryption key by using this method, it becomes possible to provide the system with flexible extensibility by downloading and updating the information on the required storage location and its encryption/decryption key when operating a new application even if the file organization of the IC card is undetermined at the time of starting the operation.

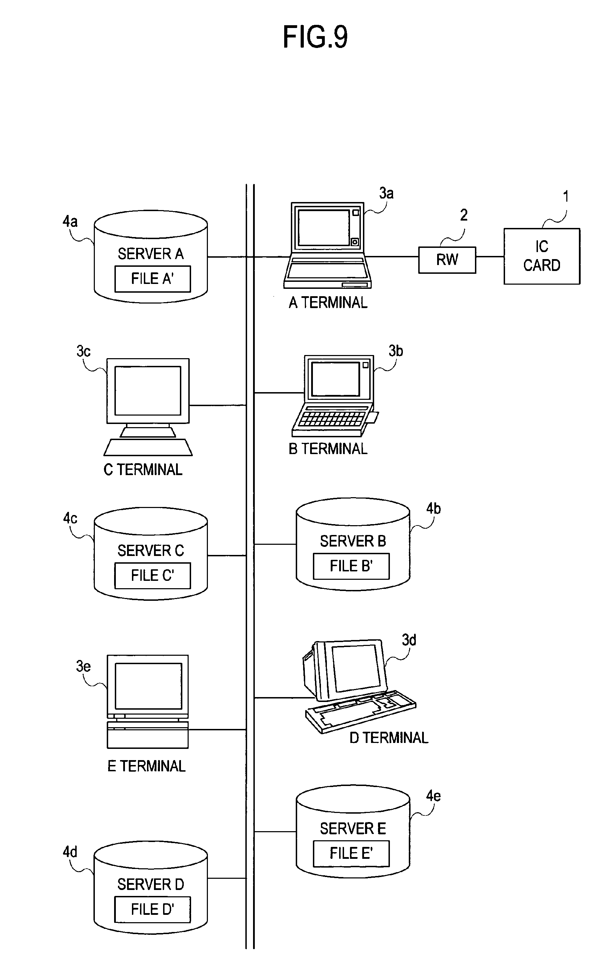

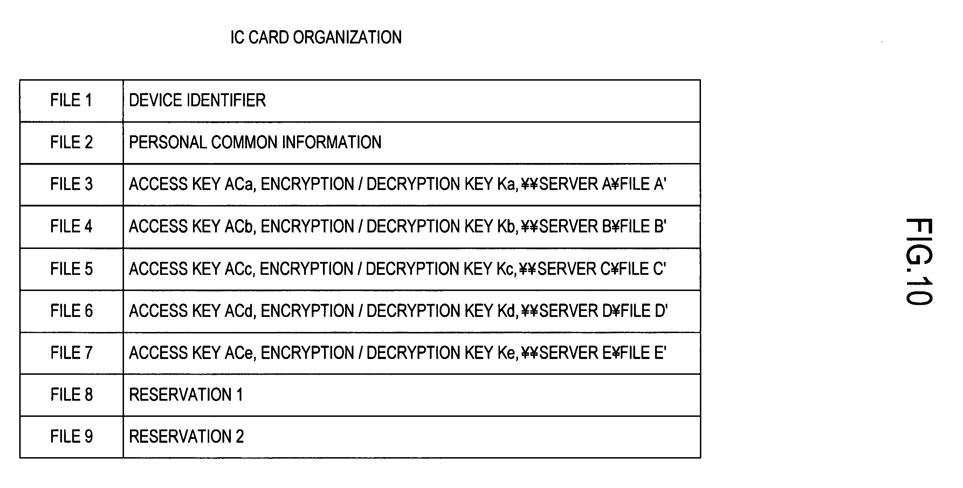

The following describes an example of using the IC card system of the present invention as an embodiment with reference to Figs. 9 and 10. Fig. 9 shows a diagram illustrating a configuration of the embodiment of the IC card system according to the present invention. Fig. 10 shows a file organization and illustrative stored data in the IC card in the embodiment in Fig. 9.

In the configuration shown in Fig. 9, there is connected an IC card reader/writer (RS in Fig. 9) 2, in which the IC card 1 of the present invention is inserted, and a processor (A terminal in Fig. 9) 3a executing the application using the IC card 1, a plurality of terminals (B terminals 3b, C terminal 3c, D terminal 3d, and E terminal 3e), and a plurality of servers (server A 4a, server B 4b, server C 3c, server D 3d, and server E 3e) are connected to each other via a network (LAN). In this regard, the respective servers store extended information encrypted with different encryption/decryption keys as files A', B', C', D', and E', respectively.

In the IC card 1, as shown in Fig. 10, settings are made of a device identifier in file 1, personal common information in file 2, and virtual area management table 12 in file 3 to file 7 with virtual area management information for each data (access key 12a, encryption/decryption key 12b, and file location information 12c). File 8 and file 9 are reserved for virtual area management information of new data.

### [First embodiment]

First, the following describes a system with an IC card imagined as the Basic Resident Register for use in utilizing local organizations or public facilities with a single IC card 1.
In Fig. 9, it is assumed that the server A is a National Diet Library server, file A is a National Diet Library admission pass DB, and the A terminal is a National Diet Library terminal. Similarly, it is assumed that the server B is a metropolitan police server, the file B is a license DB, the B terminal is a terminal accessing the license information, the server C is a Foreign Ministry server, the file C is a passport DB file, the C terminal is a Foreign Ministry terminal accessing this information, the server D is a national hospital server, the file D is an electronic medical chart DB, the D terminal is a national hospital terminal, the E server is a local authority server, the file E is a seal registration certificate DB, and the E terminal is a local authority terminal.

Describing by way of example of an admission to the National Diet Library, the A terminal starts up an application A and requests an input of the manager's password. Unless the input password is valid, the application performs trouble shooting for security protection. If the password is valid, it awaits an insertion of the IC card 1 into the IC card reader/writer 2.

For example, when a user visits the National Diet Library and inserts his/her IC card 1 into the IC card reader/writer 2, a two-way authentication is conducted between the IC card 1 and the IC card reader/writer 2. If the two-way authentication terminates normally, the application A reads the device authenticator and the personal common information from the IC card 1 and loads them in the memory 32 of the A terminal.
Then, the application A displays a password input screen for personal identification on the A terminal and compares the password input by the user of the National Diet Library with the password stored in the personal common information. If they match, the personal authentication completes.

Thereafter, the application A sends the access key to the file 3 in the IC card 1, reads the information on the encryption/decryption key Ka and the file storage location (¥¥server A¥¥file A') from the file 3, and sends a data read request by using the information on the data storage location (¥¥file A') and the device identifier to the server A since the file storage location is the server A. In response to this request, the server A reads out the encrypted file A' and sends it to the A terminal. Then, the A terminal decrypts the encrypted file A' it has received with the encryption/decryption key Ka and acquires data A (user's personal information). It is then loaded in the memory 32 of the A terminal and used in the application A.

For example, if the application A is an unlock system for a door of a building and information on the admission is set to the data of the file A, the user can unlock the door of the National Diet Library and enter the library.

Similarly, for example, if the user of the same IC card 1 visits the national hospital and inserts the IC card 1 into the IC card reader/writer 2 connected to the national hospital terminal (D terminal), an application for the hospital performs the device authentication and the personal authentication, accesses the file 6, and reads information on the encryption/decryption key Kd and the file storage location (¥¥server D¥¥file D') from the file 6. Then, the server D, which is the national hospital server, reads out file D' of encrypted electronic medical chart DB. The D terminal decrypts the file D' with the encryption/decryption key Kd and acquires data D (user's personal medical chart information or the like). It is then loaded in the memory 32 of the D terminal and used in the application D.

Similarly, if the same IC card 1 is used for the B terminal of the license information, the user can use the license DB of the metropolitan police server B; if the same IC card 1 is used for the C terminal of the Foreign Ministry, the user can use the passport DB of the Foreign Ministry server C; if the IC card 1 is used for the local authority terminal (E terminal), the user can use the seal registration certificate DB in the local authority server E.

In this manner, a user can use the data (DB) of the corresponding servers by reading it from the applications of various terminals to each terminal with the single IC card 1 very conveniently.
Each application retains only the access key of the corresponding file and therefore it is impossible to acquire the information on the encryption/decryption key and the file location information in the virtual area management information of data related to other applications. Thereby, it is impossible to get to the extended information stored in the outside of the IC card 1. Thus, the security of data for each application is improved as well as the convenience.

Furthermore, the IC card 1 does not contain the information (data) used for each application. Therefore, there is no need to carry unnecessary personal information, thereby improving the security.

### [Second embodiment]

The following describes a system with an IC card imagined as an employee ID card, in which a single IC card 1 is used in various departments.
In Fig. 9, it is assumed that the server A is an administration department server, the file A is an in and out DB, and the A terminal is an in and out reader. Similarly, the server B is an accounting department server, the file B is a travel expense application DB, the B terminal is a user terminal, the server C is a health care section server, and the C terminal is a health care section terminal.

Describing by way of example of in and out processing, the A terminal starts up the application A and requests an input of the manager's password. Unless the input password is valid, the application performs trouble shooting for security protection. If the password is valid, it awaits an insertion of the IC card 1 into the IC card reader/writer 2.

For example, when an employee inserts his/her IC card 1 into the IC card reader/writer 2 at coming into the office, a two-way authentication is conducted between the IC card 1 and the IC card reader/writer 2. If the two-way authentication terminates normally, the application A reads the device authenticator and the personal common information from the IC card 1 and loads them in the memory 32 of the A terminal.

For the in and out system, the IC card reader/writer 2 is provided with a personal identification number (PIN) input key. Upon an input of the password for personal identification, the application A compares the password with the password stored in the personal common information. If they match, the personal authentication completes.

Thereafter, the in and out application A sends the access key to the file 3 in the IC card 1, reads the information on the encryption/decryption key Ka and the file storage location (¥¥server A¥¥file A') from the file 3. The server A reads out the encrypted file A'. Then, the A terminal decrypts the encrypted file A' it has received with the encryption/decryption key Ka and acquires data A (user's personal information). It is then loaded in the memory 32 of the A terminal for use in the application A.

For the in and out application A, the in and out time is added as data. Therefore, the in and out time is first written into the memory 32 and then the data in the memory 32 is encrypted with the encryption/decryption key Ka when the IC card 1 is inserted or extracted and written into the file storage location A of the server A.

Similarly, the same IC card 1 (employee ID card) can be used for the travel expense application DB at the terminal of the accounting department and be used for the medical checkup DB at the terminal of the health care section.
As applications B and C, the different applications may be executed in the same terminal (for example, a personal computer).

## Claims

1. An IC card system, comprising an IC card, an IC card reader/writer for reading data from said IC card, and a processor having a control unit for performing data processing by using said IC card via said IC card reader/writer,
wherein said processor includes a storage unit for storing encrypted information generated by encrypting extended information and a memory, which is temporary storage means,
wherein said IC card stores personal common information, a corresponding encryption/decryption key of extended information for each application, and information on a location of said storage unit storing the encrypted information encrypted with the encryption/decryption key, and
wherein, through an executed application, said control unit includes:
personal common information loading means for acquiring personal common information from said IC card and loading it in said memory;
management information reading means for acquiring the encryption/decryption key and information on the location of the storage unit storing the encrypted information encrypted with the encryption/decryption key;
data acquiring means for reading the encrypted information from said storage unit on the basis of the acquired information on the location, decrypting it with the acquired encryption/decryption key, and loading the extended information in said memory; and
data processing means treating the personal common information and the extended information loaded in said memory as stored information of the IC card.

2. The IC card system according to claim 1,
wherein, through the executed application, the control unit includes data storage means for generating encrypted information by encrypting the extended information loaded in the memory with the acquired encryption/decryption key and storing the encrypted information in the storage unit on the basis of the acquired information on the location of the encrypted information.

3. The IC card system according to claim 1 or 2,
wherein said ID card stores an access key for accessing virtual area management information in such a way as to correspond to the virtual area management information, which is composed of the encryption/decryption key of the extended information for each application and information on the location of the storage unit storing the encrypted information encrypted with the encryption/decryption key and has processing means for reading and outputting the virtual area management information corresponding to the access key in response to a read request with an access key from the outside, and
wherein said management information reading means retains the access key corresponding to the virtual area management information of the extended information to which an access is previously permitted, sends the read request with the access key to said IC card when acquiring the virtual area management information from the IC card, and acquires the virtual area management information returned from said IC card.

4. The IC card system according to claim 1 or 2,
wherein said IC card has:
a plurality of files storing keys for use in accessing the virtual area management information in such a way as to correspond to the virtual area management information, which is composed of the encryption/decryption key of the extended information for each application and information on the location of the storage unit storing the encrypted information encrypted with the encryption/decryption key;
a master file storing cipher keys for decrypting the keys for use in accessing the files;
a table storing encrypted keys for use in accessing a file of virtual area management information meeting a request from the application; and
processing means for reading the encrypted key for accessing the file of the relevant virtual area management information from the table in response to the request from the application, decrypting the encrypted key with the cipher key in the master file, accessing the files, and outputting the virtual area management information of the relevant file, and
wherein said management information reading means sends a read request to said IC card before acquiring the virtual area management information from said IC card and acquires the virtual area management information corresponding to the application.

5. The IC card system according to one of claims 1 to 4,
wherein the control unit erases the personal common information and the extended information loaded in the memory upon termination or detecting that the IC card becomes unreadable by means of the executed application.

6. The IC card system according to one of claims 1 to 5,
wherein the IC card stores a device identifier, and
wherein, through the executed application, the control unit includes authentication means for authenticating a device by using the device identifier and enabling the respective means if the authentication is successful.

7. The IC card system according to one of claims 1 to 6,
wherein the IC card stores personal authentication information for authenticating personal identity in the personal common information, and
wherein, through the executed application, the control unit includes authentication means for authenticating the personal identity by using the personal authentication information and enabling the respective means if the authentication is successful.

8. The IC card system according to one of claims 1 to 6,
wherein the processor stores encrypted information generated by encrypting the personal authentication information for authenticating the personal identity as extended information in the storage unit, and
wherein, through the executed application, the control unit includes authentication means for authenticating the personal identity by using the personal authentication information of the extended information loaded in the memory and enabling the respective means if the authentication is successful.

9. The IC card system according to claim 8,
wherein the processor permits the personal authentication information as the extended information to be stored additionally into the storage unit.

10. The IC card system according to claim 1 or one of claims 3 to 9,
wherein the processor includes a terminal and a plurality of servers connected to said terminal via a network,
wherein the encrypted information generated by encrypting the extended information is stored in databases of said plurality of servers,
wherein, if the information on the storage location of the encrypted information acquired by the management information reading means indicates a database in a specific server, the data acquiring means of the control unit requests the specific server to read out the encrypted information, and
wherein the specific server reads out the encrypted information from the database in response to the request and sends it to said data acquiring means.

11. The IC card system according to claim 10,
wherein, through executed application, the control unit includes data storage means for generating encrypted information by encrypting the extended information loaded in the memory with the acquired encryption/decryption key and sends a write request of the encrypted information to the specific server on the basis of the acquired information on the location of the encrypted information, and
wherein the specific server stores the encrypted information into a database indicated by the information on the location of the encrypted information in response to the write request.
